# EUROPEAN PATENT SPECIFICATION

(11) **EP 2 064 841 B1**
(45) Date of publication and mention of the grant of the patent: **02.08.2017**
(21) Application number: 07826163.3
(22) Date of filing: 28.08.2007
(51) Int. Cl.: H04L 12/417, H04L 12/43, H04L 12/44, H04L 12/40, H04L 12/939, H04J 3/06

(54) **INTELLIGENT STAR COUPLER FOR TIME TRIGGERED COMMUNICATION PROTOCOL AND METHOD FOR COMMUNICATING BETWEEN NODES WITHIN A NETWORK USING A TIME TRIGGER PROTOCOL**
INTELLIGENTER STERNKOPPLER FÜR EIN ZEITGESTEUERTES KOMMUNIKATIONSPROTOKOLL UND VERFAHREN ZUR KOMMUNIKATION ZWISCHEN KNOTEN INNERHALB EINES NETZWERKS ÜBER EIN ZEITGESTEUERTES PROTOKOLL
COUPLEUR EN ÉTOILE INTELLIGENT POUR UN PROTOCOLE DE COMMUNICATION DÉCLENCHÉ TEMPORELLEMENT ET PROCÉDÉ DE COMMUNICATION ENTRE DES N UDS DANS UN RÉSEAU UTILISANT UN PROTOCOLE DÉCLENCHÉ TEMPORELLEMENT

(30) Priority: 06.09.2006 EP 06120214
(43) Date of publication of application: 03.06.2009
(73) Proprietor: NXP B.V., 5656 AG Eindhoven (NL)
(72) Inventor: UNGERMANN, Franz, 1102 Vienna (AT); VAN WAGENINGEN, Andries, 1102 Vienna (AT)
(74) Representative: Krott, Michel
(86) International application number: PCT/IB2007/053444
(87) International publication number: WO 2008/029320

(56) References cited:
- US-A1- 2005 249 495
- US-A1- 2006 147 208
- US-B1- 6 628 650
- US-B1- 6 778 536
- BERWANGER J ET AL: "FLEXRAY - THE COMMUNICATION SYSTEM FOR ADVANCED AUTOMOTIVE CONTROL SYSTEMS", SAE TECHNICAL PAPER SERIES, SOCIETY OF AUTOMOTIVE ENGINEERS, WARRENDALE, PA, US, vol. 2001-01-0676, 5 March 2001 (2001-03-05), XP009023349, ISSN: 0148-7191

## Description

This invention relates to a star-coupler connected to a plurality of nodes within a network using a time triggered protocol on a time slot basis. The invention further relates to a network including a cluster, wherein a cluster includes at least one node. Further, the invention relates to a method for communication between nodes within a network using a time trigger protocol.

Dependable automate communication networks typical relay on time triggered communication protocols like TTP/C of Flex-Ray based on broadcast methods according to a predetermined TDMA scene. Time triggered protocols are proposed for distributing real communication systems as used in, for example the automobile industry. Communication protocols of this kind are described in "FlexRay - A Communication System for advanced automate Control Systems", SEA world congress 2001.

In these systems, the media access protocol is based on a time triggered multiplex method, such as TDMA (Time Divisional Multiple Access) with a steady communication time schedule, which is defined in advance during system designs. This communication schedule defines for each communication node the point in times at which it may transmit data within a communication cycle. Such networks may include a plurality of different communication clusters. Each cluster includes at least one node, which are interconnected in various topologies. For this invention, topologies containing an active star coupler are relevant.

An active star coupler is a device to which multiple nodes are connected. The star coupler generally forwards information received on one of its input branches to all other connected nodes or sub-nets. In case of multiple simultaneously incoming data streams, generally, the first that comes is served. This concept may be combined with a central bus guardian.

A central bus guardian generally contains a protocol engine of reduced functionality to derive a communication cluster schedule. The central bus guardian implements various protective measurements to prevent faults for interfering a normal communication. It generally only forwards information of a predetermined branch during each time slot of the communication schedule, thereby protecting the channel from illicit communication. The bus guardian has an independent time base and is equipped with a scheduler, which allows right access to the medium only during time slots reserved for communication node during short tolerance areas before and after these time slots. If the bus includes a central bus guardian, it establishes a communication node that is attempting to access the data bus outside the time period reserved for it, the central bus guardian stops this access and reports the state and permanently blocks further accesses by this communication node. Thus, it ensures a fail silent property of a communication node. By using central bus guardians a single defective node, also known as "babbling idiot", which is constantly transmitting outside its allocated time slot may be blocked.

Conventional star coupler concepts are provided for application in a single network cluster. A star coupler forwards data on a physical level, whereby all connected nodes receive the same data at any output branch of the network. From a protocol point of view, there is no difference between a bus or a star topology. Therefore, the total available bandwidth in the cluster is restricted by what the time triggered protocol allows.

However, next generation high speed protocols will allow higher bandwidths, but will require additional effort in standardization, development and field tests. A cluster with high bandwidth facilities serving more nodes will in many cases have a higher probability of faults caused by the higher transmission speeds and will be more vulnerable for fault propagation than a cluster with lower bandwidths facilities serving less nodes.

Another seemingly easy solution to this need in bandwidth is to define separate clusters and to interconnect these clusters by use of gateways. However, conventional gateways must also use complex algorithms to synchronize the attached time triggered communication clusters and even then a significantly increased propagation delay of communicated messages must be accepted. Currently, no time-critical communication for safety-relevant applications may pass a gateway due to these limitations. Thus, the application of a conventional gateway within automotive networks, in which safety-relevant applications are operated is not possible.

US2005/249495 A1 discloses an optical switch which includes a star coupler connected to a plurality of nodes within a network using a time triggered protocol. Information flow in the network is based in a predetermined communication schedule and the star coupler comprises a switch controlled by a node controller and having a plurality of input branches each receiving an internal optical signal and an output branch emitting an output signal derived from the internal optical signals.

US2006/0147208 A1 discloses a system for slot deflection routing of optical data packets.

US6,628,650 discloses a variable rate TDM switching system. The document "FLEXRAY - THE COMMUNICATION SYSTEM FOR ADVANCED AUTOMOTIVE CONTROL SYSTEMS", published by the SOCIETY OF AUTOMOTIVE ENGINEERS, WARRENDALE, PA, US, provides an overview of a flexray system.

Document US6778536 B1 discloses a method and apparatus for switching of data packets in a communications network in a timely manner while providing low switching complexity and performance guarantees.

Known star coupler concepts are able to disconnect one or more of the connected branches from the rest of the cluster, but do not support disjunctive operation of individual branches parallel.

US2005/0094674 A1 describes an active star coupler, in which a plurality of communication nodes is connected via point to point connections. The data transmitted by a communication node is passed to all other communication nodes with aid of the distribution unit in the star coupler.

Due to the bandwidth and the delay limitations, it is an object of the present invention to provide a star coupler, which is able to increase the bandwidth and to communicate with low propagation delay for communicating the relevant data.

The invention is defined in the accompanying claims.

An embodiment of this invention may provide a so-called switched star coupler or intelligent star coupler, which may be easily configured such that it distributes incoming data at any port to all other ports. The inventive intelligent star coupler may include all features of a conventional active star coupler, e.g. like synchronized nodes and the appliance of multiple redundant couplers for fault tolerant reasons.

By use of a switched intelligent star coupler according to an embodiment of this invention, a higher total available bandwidth may be provided because parts of the communication flow may be forwarded in parallel without interfering each other. It may also offer a better protection against fault propagation because the communication flow can be separated and incoming data can be selectively forwarded.

An embodiment of this invention may provide an intelligent active star coupler for increasing the available bandwidth of a cluster without requiring modifications in the hardware or software of other involved components. Thus, it may be possible to allocate more applications to a single communication cluster without having to resort complicated solutions over different communications domains and to interconnect these with expensive gateways.

Further, the propagation delays may be decreased by not using any gateways.

According to an embodiment of this invention, a switch is added to the active star coupler, which is controlled by a switch controller. The switch controller receives information from a protocol engine and from a communication schedule unit. The information contains at which time slots which input branches are connected to which output branches. Thereby, the data throughput of the communication cluster is dramatically increased up to nearly n-times, if n-branches are attached to the intelligent star coupler. Further, the invention is completely backward compatible to the communication cluster. It provides also an increased protection for the communication media and is thereby fully usable for safety relevant application. It further solves the difficult problem of connecting multiple time triggered clusters to one another in an easy and intuitive way by logically combining the different clusters into a single one. This is especially applicable for the FlexRay protocol.

An intelligent star coupler is nearly including all functionality contained in a central bus guardian. Thus, a star coupler according to an embodiment of this invention may be integrated into a central bus guardian. However, it may operate perfectly alone, or even replace a central bus guardian.

The star coupler includes means for deriving the position within a communication schedule. Further, it should operate in a broadcast mode (first come first serve) before a communication schedule is established. In particular it is advantageous when the star coupler could derive the communication cluster schedule faster than other nodes in the cluster, but this is not a necessary feature.

It is further advantageous to switch the switch depending on the time slot number. However, some protocols have additional identifications like a cycle number, which may be used to have different connections of the input branches to the output branches within the same time slot but in different cycles. Thus, the switching of the connections may be different in different cycle numbers.

Embodiments of this invention are described in detail below with reference to the accompanying schematic drawings, wherein:
- Fig. 1: shows a network including a plurality of sub-nets within a cluster as used in invention;
- Fig. 2: shows a configuration of a node according to the invention;
- Fig. 3: shows an embodiment of an intelligent star coupler architecture according to the invention;
- Fig. 4a to 4c: show examples for a configuration schedule of the switch;
- Fig. 5: shows a dynamic protocol segment solution according to the invention;

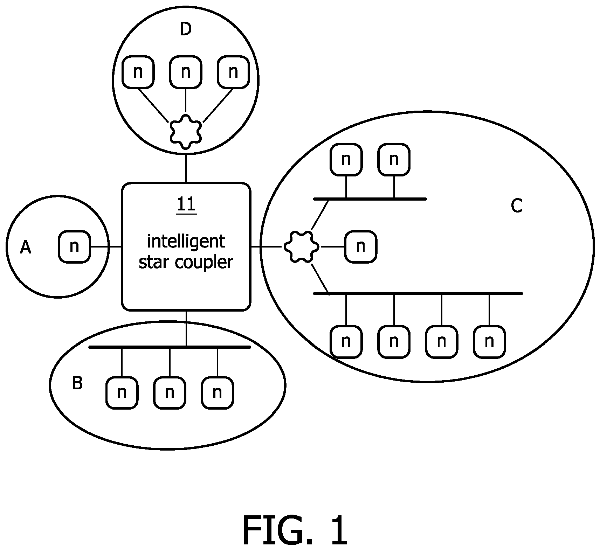

Fig. 1 illustrates a network as used in the present invention. The cluster illustrated in Fig. 1 is portioned into a number of sub-nets (A-D), each of them be supported by a passive bus or by an active star-coupler in a connection topology. These sub-nets are interconnected by the intelligent star-coupler 11, which is provided for inter sub-net communication. Several sub-nets A-D are connected to the intelligent star-coupler 11. The sub-nets A-D have different topologies. In particular, it is depicted that sub-net B includes a passive bus. Sub-net C comprises a hybrid topology including a star coupler and a passive bus topology. Sub-net D includes an active star topology, wherein sub-net A includes a single node only. Naturally, an arbitrary number of sub-nets can be connected. Depending on the protocol used in the network, it may be possible to restrict the topology that only one sub-net may contain a single conventional active star coupler.

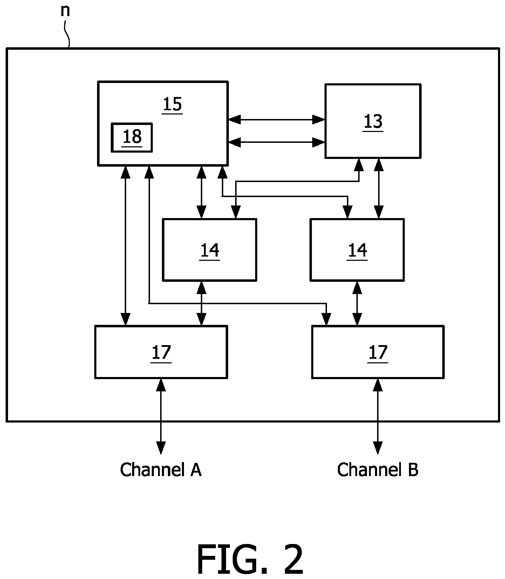

With reference to fig. 2, a node n used in such sub-net is described in more detail. A typical fault-tolerant time-triggered network consists of two or more communication channels, to which nodes are connected. Each of those nodes n consists of a bus driver 17, a communication controller 15 and eventually a bus guardian device 14 for each bus driver and an application host 13. The bus driver 17 transmits the bits and bytes that the communication controller 15 provides onto its connected channels and in turn provides the communication controller 15 with the information it receives from the channel Channel A, B. The communication controller 15 is connected to both channels and delivers relevant data to the host application 13 and receives data from it that it, in turn, assembles to frames and delivers to the bus driver 17. The realization of a node within the sub-nets is not relevant for the invention. The configuration of such node is explained only for getting a better overview for the application. The invention is not limited or restricted by the presence or absence of parts within the described node. The communication controller 15 contains a so-called protocol engine 18, which provides a node n with the facilities for the layer-2 access protocol. Most relevant for this invention is the facility to access the medium with a pre-determined TDMA scheme, or communication schedule. The communication schedule for each node n inside a cluster has to be configured such that no conflict between the nodes n occurs when transmitting data on the network. The bus guardian 14 is a device with an independent set of configuration data that enables the transmission on the bus only during those slots, which are specified by the configuration set. The host application 13 contains the data source and sink and is generally not concerned with the protocol activity. Only decisions that the communication controller 15 cannot do alone are made by the host application 13.

In many cases a conventional active star coupler connects the nodes n in a cluster. Its purpose is to improve the signal quality on the communication line, compared to the situation where nodes n are connected via a passive bus. A conventional active star coupler allows connecting more nodes n in a single cluster than a passive bus. It further offers the possibility to disconnect malfunctioning nodes n from the cluster in order to limit the propagation of faults through the cluster. A conventional star coupler works on physical level forwarding data from one selected input port to all output ports at a time. On protocol level, it does not show a difference between a bus and a star topology.

Synchronization between the nodes n is a pre-requisite to enable time-triggered TDMA based access to the network. Every node n has its own clock, for which the time base can differ from the other nodes n, although they are originally intended to be equal, caused by temperature and voltage fluctuations and production tolerance.

The communication controller 15 within each node n includes a synchronization mechanism, wherein nodes n listen to their attached channels and can adapt to the synchronization or influence a common clock rate and offset.

Network startup in a single cluster is handled by so called cold-starting nodes, whereof one initiates the communication cycles in a cluster and others respond. This node is selected either by configuration or by some algorithm, that determines which of several potential nodes performs the startup. This algorithm generally consists of transmitting frames or similar constructs over the attached channels, whenever no existing schedule could be detected. The communication controller 15 of a cold-starting node thereby has to listen to all attached channels and has to transmit its startup data on all attached potentially redundant channels at the same time. There is only one single control logic 18 for the startup inside the communication controller 15 for all attached channels. Each node within the cluster listens to its attached channels. If it receives specific frames or similar constructs indicating a startup it will adopt the timing scheme from the observed communication and integrate into the system.

A central bus guardian (not illustrated) may be added to such a cluster. The cluster is then partitioned into single nodes or sub-nets, which are in turn connected to the central bus guardian. This central bus guardian is preconfigured with information about the communication schedule of its cluster with respect to which of its branches may transmit data to the other branches during which time slot of the communication schedule. Some implementations also allow the bus guardian to gain the knowledge regarding which of its pins is connected to which branch in an initial learning phase to prevent misconnections during installations. The central bus guardian also contains logic to determine the communication schedule from information received from its branches. This normally is a protocol engine with reduced functionality in some respects and added functionality with respect to protecting against different types of faults (e.g. protection against illicit startup attempts from branches that cannot do so, protection against transmissions longer than anything possibly legal, etc.).

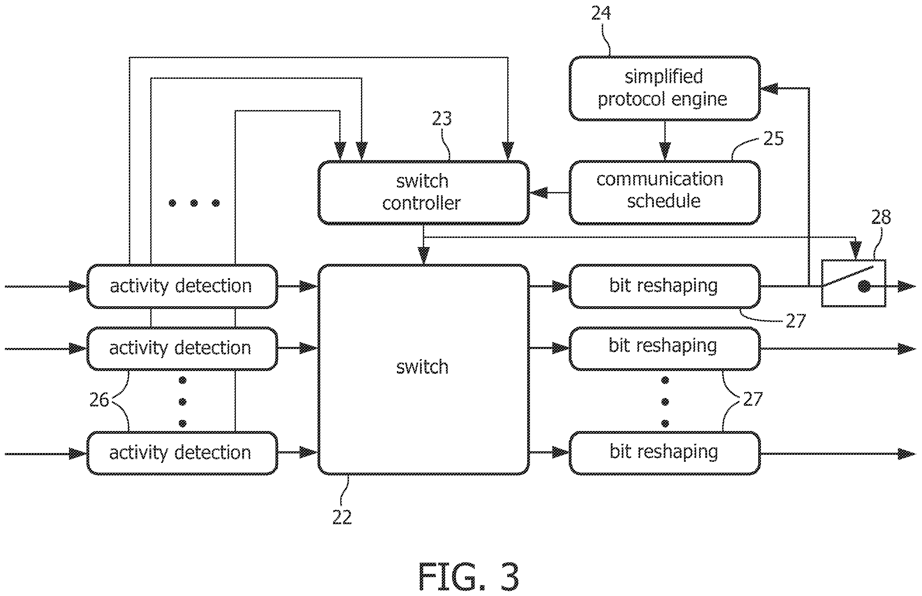

According to Fig. 3, an intelligent star coupler architecture according to the present invention is illustrated. The intelligent star coupler includes a switch 12 having a plurality of input branches and a plurality of output branches. The switch 12 is connected to a switch controller 13 controlling the connections from the input branches to the output branches within the switch 12. Further, there is a simplified protocol engine 24 decoding communication elements, wherein the communication elements are series of signals defined in the protocol specification. For the FlexRay protocol the communication elements include, e.g. a wakeup pattern, the collision avoidance symbol, synchronization and startup frames and data frames. The cluster has a preconfigured communication schedule consisting of various segments which are partitioned into slots, etc. In FlexRay a time slot can be assigned to only a single node, whereas the switch 22 enables multiple nodes to transmit within a time slot. This communication schedule must be preconfigured into the various nodes and the intelligent star coupler 11. During the cluster startup, the nodes agree upon a cycles start and thereby basically on the position of the slots in time. The intelligent star coupler has the a priori knowledge of which branch is to be connected to which other branches for any given time slot, but it does not have the knowledge of which time slot it currently is. Here the protocol engine 24 comes into the picture, which decodes communication elements and therefrom derives the current position within the communication schedule and offers this information to the communication schedule unit 25 and the switch controller 23, which then can configure the switch 22 accordingly.

Based on the decoded communication elements, the simplified protocol engine 24 constantly derives the current position in the communication schedule (i.e. which slot it currenlty is). This information is provided to the communication schedule 25 unit, which contains for each time slot a matrix defining the required connections of the input branches to the one or more output branches. The communication schedule unit 25 provides this matrix and the appropriate switching times to the switch controller 23. The matrix includes which inputs are connected to one or a plurality of output branches for a predetermined time slot. Additionally, in the input branches, there are activity detection units 26. These activity detection units 26 are used in particular during the time period in which no communication cluster schedule has been established. During that time, the activity detection units 26 monitor the input branches and provide an activity information to the switch controller 23 for controlling the switch 22. Further, in the output branches there are bit-reshaping units 27, which are explained below.

An intelligent star coupler 11 is based on conventional star coupler, including additional means 24, 25 for the deriving knowledge about the protocol timing and having thus the ability to selectively forward messages sent in a certain time slot to a specific output branch. In contrast to a conventional active star coupler, more than a single input branch may be active during a single time slot. This feature multiplies the available bandwidth without reducing the protection provided by a conventional active star coupler.

As depicted in Fig. 3, the data stream is highlighted by the bold arrows. On the left side of the star coupler 11 the input lines are connected via the arrows to the right hand side symbolize the data connection to the output branches. The various components of the switch 22 are now described in more detail. The activity detection unit 26 is provided at the input side of the intelligent star coupler 11. While the intelligent star coupler 11 is not yet synchronized to the communication schedule the activity detection unit 26 may provide a degraded service in a "first come first serve" fashion. Which ever input branch is activated first is forwarded to all output branches. These activity detection units 26 may also be used during the FlexRay dynamic protocol segment. However, the activity detection unit 26 is not an essential feature since there could be further means for managing the time period, in which the intelligent star coupler 11 is not yet synchronized to the communication schedule.

The switch controller 23 controls the switch 22 and thereby determines which input branches of the switch 22 are connected to which output branches during a given time slot. The switch controller 23 receives information both from the activity detecting units 26 and from the communication schedule unit 25. As mentioned above while the communication schedule is not yet established, the switch controller 23 uses the activity detecting units 26 solely for configuring the switch 22, while as soon as a communication schedule is established, it disregards the activity detecting units 26.

The protocol engine 24 of the intelligent active star coupler 11 should generally receive all synchronization information exchanged by the sub-nets connected to the input branches (i.e. sync/startup frames), as should all other communication controllers 15 of the nodes n within sub-nets. So, whenever such a frame is being transmitted in one of the sub-nets this frame will be forwarded to all other sub-nets except for its own sub-net since at the one hand it has already been transmitted there by the original node and at the second hand this will cause interference. The protocol engine 24 is attached to one output branch in this implementation form only, so by just not transmitting the sync frame to this output the protocol engine 24 would miss out the frame. To also enable it to recieve that sync frame the additional switch 28 has been added to be able to forward the sync frame to the protocol engine 24, but to prevent it from being actually transmitted into the sub-net it originated from.

An alternative (not illustrated) to this construct would be to add an additional output to the switch 22, thereby increasing the switch 22 from nxn to an nx(n+1) switch. This additional output is then connected to the simplified protocol engine 24 with or without an additional bit reshaping unit.

The switch 22 can be arbitrarily connect each input branch to one or multiple output branches. However, it cannot necessarily connect multiple inputs to one output line. The preferred implementation of the switch 22 is an analogous crossbar switch. Alternatively, different implementations can be used. Such different switch implementations will be explained below. However, the propagation delay used by different switch architectures must be kept minimal since the end-to-end propagation delay in a TDMA communication cluster directly influences effectively usable bandwidth.

The bit reshaping units 27 use appropriate algorithms to regenerate the communication elements that were distorted by typical physical layer effects. These algorithms are for example the decoding of the communication elements via the normal decoding algorithm of the protocol (oversampling, majority voting and bit strobing for FlexRay) followed by an encoding of the resulting bit stream. In effect, the signal is converted back to digital form and then clearly regenerated. The typical physical layer effects influencing the bit stream are for example electromagnetic emissions, asymmetries in the LOW/HIGH and HIGH/LOW transitions within the transceivers, reflections, etc. This bit reshaping prevents the accumulation of asymmetries possible if a signal travels through multiple star couplers. The bit-reshaping units 27 are optional components. Thus, the intelligent star coupler 11 may be operated also without a bit reshaping unit 27. Further, the bit-reshaping units 27 may also be situated before passing through the switch 22 or even before the activity detection unit 26. In particular, clocked switch implementation would benefit from the bit reshaping unit, being situated before the switch.

The simplified protocol engine 24 is a protocol depending unit, which is able to decode communication elements and to derive the synchronization of the cluster from this. The protocol engine 24 generally can use a standard protocol IP but also be reduced in functionality to reflect the fact that it need not actually send data and is connected to only a single channel. The protocol engine 24 supplies the communication schedule unit 25 with the necessary information about which time slot the protocol currently is in. In particular, the protocol engine 24 is connected to only one output branch. However, this is sufficient since during the time in which no cluster communication schedule is available or in which the cluster is not synchronized, the switch is working in that way that a first coming input branch is connected to all output branches. Thus, also the first output branch will receive the data received on one of the input branches.

The communication schedule unit 25 contains the communication schedule matrix including which input branch must be connected to which output branch during which time slot. It may even indicate that during certain time slots, the activity detection shall be used again. This enables dynamic slot usage in dedicated segments of the schedule that do not need to be protected. The data stream may be observed or monitored also before the reshaping unit 27.

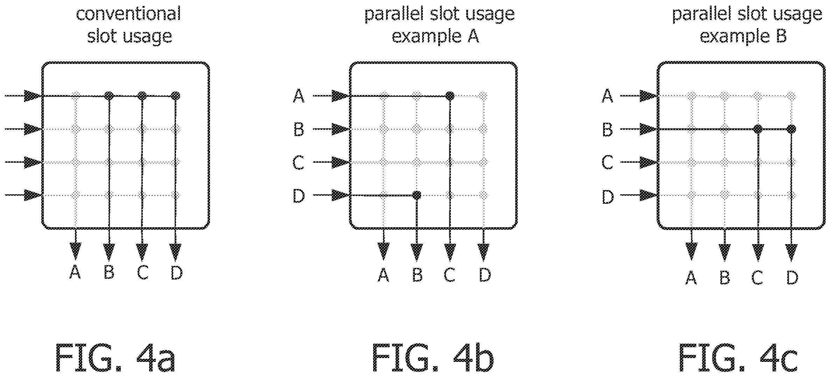

In the following the switch configuration will be explained referring to Figs. 4a to 4c. The configuration of the cross point matrix may be changed for every communication time slot. Figs. 4a to 4c indicate examples of configuration schedules for a 4 x 4 intelligent star coupler. In Fig. 4a, a matrix is shown according to a conventional slot usage, where during the specific time slot all data received on the input branch from sub-net A is forwarded to all other output branches of the sub-nets B, C and D. The example of Fig. 4a is valid for the time before synchronization is reached within a cluster.

Fig. 4b shows how connecting sub-net A with sub-net C and in parallel the connecting of sub-net D with sub-net B. Thus, the available bandwidth in this time slot is actively doubled. It could easily be recognized that two input branches are active within the same time slot in parallel. Such parallel activity of more than one input branch is not possible with a conventional star coupler.

The example shown in Fig. 4c illustrates how sub-nets can be completely disconnected from another sub-net during a specific time slot. According to the example shown in Fig. 4c, the sub-net A can communicate internally something that is not of interest for the other sub-nets while sub-net B shares information with the sub-nets C and D. Thus, the available bandwidth within this time slot is effectively doubled.

This configuration allows optimal bandwidth usage in each time slot by providing the information to those sub-nets that require them. In the extreme case the intelligent star coupler 11 can decouple all sub-nets A-D completely from one another to achieve a theoretical maximum of n-times the normal bandwidth with n attached sub-nets.

This description handled up to now only a single communication channel. However, the invention can naturally also be used for communication systems that use multiple channels, since it does not impose any requirements on these channels. It can be used both in single channel or multiple channel systems. Should a multiple channel system be used, an intelligent star coupler may be used on only a subset of the available channels or all channels. These intelligent star couplers need not communicate with one another and need not be modified to accommodate for multiple channel usage. However, in case of multiple channels only the switch 22 and maybe the activity detection units 26 and bit reshaping units 27 are multiple realized, since these multiple components could be controlled by only one protocol engine 24, one communication schedule unit 25 and one switch controller 26. In particular, these three components 24, 25 and 23 may be combined within one circuit block for single and for multiple channels.

Therefore, the invention may be transparently integrated into existing systems and does not introduce additional single point of failures.

As mentioned above a number of different switch implementations may be used for the intelligent star coupler, which are now described in a more detailed way. The preferred solution is the analogue crossbar, but the invention explicitly also encompasses different implementations of the switch.

The architecture depicted in Fig. 3 illustrates an analogue crossbar switch with bit reshaping at the output branches. This architecture produces a clearly regenerated output signal with minimal propagation delay, thereby not effecting the communication cluster precision. Naturally the analogue crossbar switch may also be assembled from smaller 2x2 switches.

Alternatively, a digital crossbar may be used. A digital crossbar has an input clock and aligns its output values only at clock edges to its inputs. To achieve a good signal quality on the output lines this clock must be faster than the bit-clock. For the FlexRay protocol, a clock with more than 8-times over sampling is the minimum (FlexRay sample clock speed). Such a digital crossbar switch might benefit greatly from positioning the bit-reshaping unit before the switch. Generating bits before the switch reduces the need of feeding over sampled values through the switch. A small FIFO of small depth for generated bit values is sufficient so that the switch can be clocked with only the bit-clock speed, thereby reducing implementation costs. However, such a solution might interfere with the clock correction algorithms of the protocol in question, thereby worsening the precision and thereby effectively reducing the available bandwidth. The effects can be calculated though and configured into the cluster by increasing the safety intervals in between transmissions, so that no functional degradation will occur except for the slightly reduced available bandwidth.

Further, memory switches may be used, wherein the description for the digital crossbar can principally also be applied to a single memory switch. Instead of a crossbar and FIFOs, all samples are written into a central memory. Again, by putting the bit-reshaping units before the switch, the load on memory accesses can be reduced by an order of magnitude and thereby reduce implementation cost.

The inventive star coupler may especially be used in combination with the FlexRay protocol. The FlexRay protocol uses a dynamic protocol segment for non-safety-relevant communication. Therein, a dynamic arbitration scheme is used for using the available bandwidth more efficiently. Slots without transmission are shortened to the bare minimum while slots with transmissions are fitted tightly around the transmitted frame. Thus, the slot length is not equal for all slots. Further, it is not known in advance, when a slot starts and when it ends.

The use of the inventive star coupler for the dynamic protocol segment generally complicates the switching of the switch 22, since the slots are of arbitrary length. To make things even worse, the slot counting in the nodes is based on the assumption that all nodes see the same information on the attached signal lines. If the sub-nets are decoupled their slotting will quickly get out of sync, preventing intercommunication. Therefore, this dynamic protocol segment must be handled differently from the static protocol segment of the communication cycle, so an improved functionality of the intelligent star coupler shall also be implemented here. For solving the problem to use the inventive star coupler also in the dynamic protocol segment three different solutions to the problem of the dynamic segment are given. Each solution is adding more functionality to the intelligent star coupler.

At first it should be guaranteed to still be able to communicate in the dynamic protocol segment when using the inventive intelligent star coupler 11. Therefore, it is easiest to just replicate the behaviour of a conventional active star coupler for this dynamic protocol segment. That means for the dynamic protocol segment the intelligent star coupler will act as a conventional star coupler. Whichever sub-net first starts a transmission is forwarded to the other sub-nets. Using the activity detector units 26 this is easily implemented. As stated, this solution has the same behaviour as a conventional active star coupler and therefore no advantages for the dynamic protocol segment.

Secondly, since the intelligent star coupler contains a simplified protocol engine 24, it may impose a certain degree of protection. It can derive like all other nodes within the cluster the current time slot from the observed traffic and therefore the protocol engine 24 may allow only certain sub-nets transmission within this time slot. However, this transmission must still be forwarded to all other sub-nets. Should a sub-net try a transmission during a time slot within which it does not have the permission, its transmission will be contained to this sub-net. This sub-net is then likely desynchronized from the other sub-nets due to this fault-containment. Therefore, this sub-net can be optionally ignored and blocked for the remainder of this dynamic protocol segment. In the next communication cycle, this sub-net may or may not be allowed transmission again depending on different well-known algorithms (e.g. error counter, etc.).

To provide an improved bandwidth also in the dynamic protocol segment a parallel usage of the switch to a certain degree is proposed and thereby an effective bandwidth increase can be achieved. The intelligent star coupler behaves first as described in one of the two previous solutions. Its simplified protocol engine 24 is aligned to the cluster and knows within which slot the cluster currently is. At defined time slot boundaries, the star coupler 11 may then decouple certain sub-nets, thereby creating synchronized sub-clusters. These decoupled sub-clusters remain then unmodified until the end of the dynamic protocol segment. The sub-cluster, to which the simplified protocol engine 24 of the intelligent star coupler is attached to can be further sub-divided at succeeding slot boundaries. Within a sub-cluster, whichever sub-net transmits first is forwarded to all other sub-nets of this sub-cluster. If a sub-cluster consists of only a single sub-net, no forwarding to other sub-nets is necessary. This sub-net can then use the remainder of the dynamic protocol segment efficiently for internal communication within the sub-net. The sub-cluster to which the simplified protocol engine of the intelligent star coupler is attached may provide additional protection (blocking nodes, keeping synchronization) as described above.

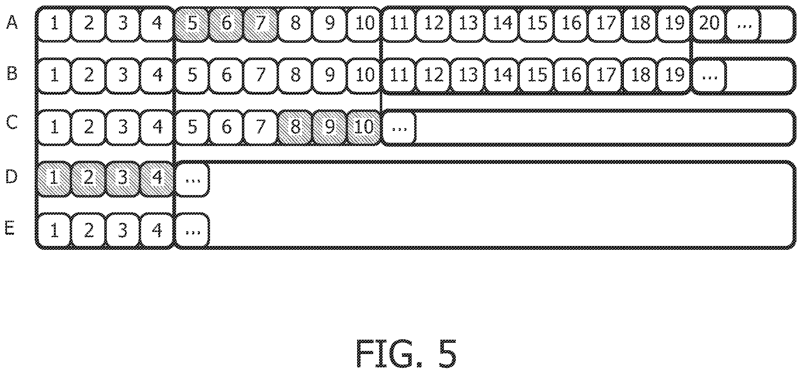

This solution for using the inventive star coupler also for the dynamic protocol segment will be explained in more detail with reference to fig. 5. Fig. 5 illustrates a dynamic segment bandwidth increase example. Slots that the intelligent star coupler 11 knows about are shown numbered. Communicating sub-clusters are contained in a heavy box. Slots with protection are hatched. Within these slots only the hatched sub-net may transmit. Fig. 5 provides an example of an intelligent star coupler 11 with five sub-nets A-E. The simplified protocol engine 24 of the intelligent star coupler 11 is attached to sub-net A. During the first four slots of the dynamic protocol segment, the intelligent star coupler 11 allows only sub-net D to transmit frames (the slots of sub-net D are hatched). This protects these slots from erroneous transmissions from the other sub-nets. The input from sub-net D is forwarded to all other sub-nets. From slot five on, sub-nets D and E are decoupled from the other sub-nets A-C and coupled together. Any transmission of sub-nets D and E is forwarded to only the other in a first come first served fashion for the remainder of the dynamic protocol segment. Thus, the switch 22 is divided into two parts by the switch controller 23. The upper part is handling sub-nets A-C, wherein the lower part is handling the sub-nets D and E. The lower part is acting like a conventional switch, wherein the upper part operates as follow. From slot five to slot seven on, only sub-net A may transmit to sub-nets B and C, while from slots eight to ten only sub-net C is allowed to transmit frames to sub-nets A and B.

After slot ten the matrix of the switch is further divided. In particular sub-net C is decoupled. From slot eleven onwards, transmissions from sub-net C are contained in sub-net C. To save memory, no further protection is provided in the sub-cluster consisting of sub-net A and B from slot eleven onwards. However, at slot twenty, also these sub-nets A and B are decoupled. As an extension to this, more than one simplified protocol engine may be added to the intelligent star coupler. This would enable more than one sub-cluster to be further sub-divided and protected in the dynamic segment progresses.

Please note that FlexRay allows an active star coupler to remove part of the beginning of transmission while passing it on. This is still true for the intelligent star coupler, at least if only one other active star is present in the channel.

Thus the invention provides an intelligent star coupler capable of activating more than one input branch within one time slot. Thereby, parallel transmissions are possible. This will increase the bandwidth.

## Claims

1. A star coupler (11) connected to a plurality of nodes (n) within an automotive network using a time triggered protocol on a time slot basis, wherein the information flow within this network is based on a predetermined communication schedule determining which node (n) can transmit in a predetermined time slot, wherein the star coupler (11) comprises:
a switch (22) having a plurality of input branches and output branches, wherein a branch is connected to at least one node (n);
a switch controller (23) for controlling the switch (22); and
means for deriving knowledge about the protocol timing, which knowledge is used for selectively forwarding incoming data in a certain time slot to at least one predetermined output branch,
wherein the means for deriving knowledge about the protocol timing comprise a protocol engine (24) coupled to one of the output branches for decoding communication elements within communication data and for deriving a position within a cluster communication schedule from the communication elements.

2. A star coupler according to claim 1, wherein the switch (22) is operable to switch two or more inputs branches of the star coupler (11) during a single time slot in parallel to two or more output branches.

3. A star coupler according to claim 1 or 2, wherein the switch (22) is operable, depending on the communication schedule, to switch each input branch to one or multiple output branches of the star coupler (11).

4. A star coupler according to any preceding claim, wherein the protocol engine (24) is coupled to one output branch, wherein in case of outputting data to the same branch the respective output branch is disabled by a switching means (28).

5. A star coupler according to any preceding claim, wherein the protocol engine (24) is coupled to an additional output branch of the switch (22) having a nx(n+1) matrix to be able to connect each of the output branches with the protocol engine (24).

6. A star coupler according to any preceding claim, wherein the star coupler (11) comprises activity detecting units (26) at the input branches for detecting data traffic on a certain input branch, wherein the activity detecting units (26) are coupled to the switch controller (23) for providing activity information, which is used for controlling the switch (22).

7. A star coupler according to claim 6, wherein the activity information is used for controlling the switch (22) as long as a communication schedule is not established.

8. A star coupler according to claim 6 or claim 7, wherein the star coupler (11) comprises at least one bit reshaping unit (27) at an input branch before or after the activity detection unit (26) or at the output branch for regenerating communications elements.

9. A star coupler according to one of the claims 6 to 8, wherein the star coupler (11) comprises a communication schedule unit (25) comprising information, which input branch needs to be connected to which output branch for a predetermined time slot and/or information in which time slots the activity detection units (26) are to be used.

10. A star coupler according to claim 8 or 9, wherein the switch (22) is realized as an analogous crossbar switch or a digital crossbar switch using a clock, wherein a digital crossbar switch is used in combination with a FIFO-unit, wherein the bit reshaping units (27) are arranged then before the switch (22).

11. A star coupler according to one of the claims 1 to 9, wherein a memory switch is used including a memory for storing all inputted data and reading the output data.

12. A star coupler according to any preceding claim, wherein a switch (22) is assigned to a single communication channel, wherein in case of multiple channels within the network each channel is connected to one switch (22), wherein the protocol engine (24), the communication schedule unit (25) and the switch controller (23) are coupled to the multiple switches (22) for controlling the multiple switches (22).

13. A star coupler according to one of the claims 1 to 12, wherein the FlexRay protocol is used for communicating within the network.

14. A star coupler according to claim 13, wherein the FlexRay protocol includes a static protocol segment and a dynamic protocol segment, wherein during the dynamic protocol segment of the FlexRay protocol the star coupler (11) is controllable as an active star coupler, without using the multiple assignment of input branches to output branches, wherein the star coupler is arranged to serve first a sub-net (A-D) connected to the star coupler (11) starting a transmission is served first and the input branch of the first transmitting sub-net (A-D) is connected to all other subnet-output branches.

15. A star coupler according to claims 13 or claim 14, wherein the FlexRay protocol includes a static protocol segment and a dynamic protocol segment, wherein during the dynamic protocol segment of the FlexRay protocol the protocol engine (24) of the star coupler is operable to observe the received traffic for recognizing the position within the communication schedule, and, based on this observation and the predetermined communication schedule, is operable to allow only the input branch determined in the current slot to transmit.

16. A star coupler according to claims 13 or claim 14, wherein the FlexRay protocol includes a static protocol segment and a dynamic protocol segment, wherein during the dynamic protocol segment of the FlexRay protocol the protocol engine (24) of the star coupler is operable to observe the received traffic for recognizing the position within the communication schedule, and, in response to a transmission by an input branch (A-D) contrary to the predetermined communication schedule protocol engine (24) is arranged to block that input branch for the remaining dynamic segment within the current cycle.

17. A star coupler according to claim 13, wherein the FlexRay protocol includes a static protocol segment and a dynamic protocol segment, wherein during the dynamic protocol segment of the FlexRay protocol the protocol engine (24) of the star coupler (11) is operable to determine the position within the communication schedule, and, in dependence on the communication needs between the input branches (A-D) is arranged to control the switch (22) is controlled to decouple one or a part of the input branches (A-D) from being synchronized with the remaining input branches to allow a direct forwarding of data in between a sub-net connected to the one decoupled input branch or between connected nodes or sub-nets of decoupled input branches (AD) during the dynamic protocol segment.

18. A star coupler according to any preceding claim, wherein the switching of the switch (22) is performed based on a slot number and/or a cycle number.

19. A network comprising a cluster including a plurality of nodes (n), wherein the network is operable on a time triggered basis using time slots, wherein at least some of the plurality of nodes (n) within the cluster are coupled to a star coupler (11) as claimed in any preceding claim.

20. A method for communicating between nodes (n) within a network using a time triggered protocol on a time slot basis, wherein the nodes (n) are coupled to a star coupler (11), the method comprising:
receiving input data at an input branch of the star coupler (11);
decoding communication elements from an output branch of a switch (22) to derive a position within a communication schedule from the communication elements, wherein the switch has a plurality of input branches and output branches;
providing the communication schedule to a switch controller (23); and
the switch controller using the communication schedule to control the switch, on a time slot basis, to connect each input branch to one or multiple output branches, wherein a plurality of input branches can be active within the same time slot.

## Patentansprüche

1. Ein Sternkoppler (11), der verbunden ist mit einer Mehrzahl von Knoten (n) innerhalb eines Fahrzeugnetzwerkes, der ein Zeit ausgelöstes Protokoll auf einer Zeitschlitz Basis verwendet, wobei der Informationsfluss innerhalb dieses Netzwerkes basiert auf einem vorbestimmten Kommunikationszeitplan, der bestimmt, welcher Knoten (n) in einem vorbestimmten Zeitschlitz übermitteln kann, wobei der Sternkoppler (11) aufweist:
einen Schalter (22), der eine Mehrzahl von Eingangszweigen und Ausgangszweigen hat, wobei ein Zweig verbunden ist mit wenigstens einem Knoten (n);
ein Schalter Kontroller (23) zum Steuern des Schalters (23) und
Mittel zum Ableiten von Wissen über das Protokoll Timing, wobei das Wissen verwendet wird zum selektiven Weiterleiten von eingehenden Daten in einem bestimmten Zeitschlitz an wenigstens einem vorbestimmten Ausgangszweig,
wobei das Mittel zum Ableiten von Wissen über das Protokoll Timing aufweist eine Protokoll Maschine (24) die gekoppelt ist an einen von den Ausgangszweigen zum Dekodieren von Kommunikationselementen innerhalb der Kommunikationsdaten und zum Ableiten einer Position innerhalb eines Cluster Kommunikationszeitplans von den Kommunikationselementen.

2. Ein Sternkoppler gemäß Anspruch 1, wobei der Schalter (22) betreibbar ist zum Schalten zweier oder mehrerer Eingangszweige von dem Sternkoppler (11) während eines einzigen Zeitschlitzes parallel zu zwei oder mehreren Ausgangszweigen.

3. Ein Sternkoppler gemäß Anspruch 1 oder 2, wobei der Schalter (22) betreibbar ist zum Schalten jedes Eingangszweiges zu einem oder mehreren Ausgangszweigen des Sternkopplers in Abhängigkeit von dem Kommunikationszeitplan.

4. Ein Sternkoppler gemäß einem der vorhergehenden Ansprüche, wobei die Protokoll Maschine (24) gekoppelt ist an einen Ausgangszweig, wobei im Falle von der Ausgabe von Daten an den gleichen Zweig, der jeweiliger Ausgangszweig deaktiviert wird mittels eines Schaltermittels (28).

5. Ein Sternkoppler gemäß einem der vorhergehenden Ansprüche, wobei die Protokoll Maschine (24) gekoppelt ist an einen zusätzlichen Ausgangszweig von dem Schalter (22), der eine nx(n+1) Matrix hat, die geeignet ist zum Verbinden von jedem von den Ausgangszweigen mit der Protokoll Maschine (24).

6. Ein Sternkoppler gemäß einem der vorhergehenden Ansprüche, wobei der Sternkoppler (11) aufweist Aktivität detektierende Einheiten (26) an den Eingangszweigen zum Detektieren von Datenverkehr an einem bestimmten Eingangszweig, wobei die Aktivität detektierenden Einheiten gekoppelt sind an den Schalter Kontroller (23) zum Bereitstellen einer Aktivitätsinformation, die verwendet wird zum Steuern des Schalters (22).

7. Ein Sternkoppler gemäß Anspruch 6, wobei die Aktivitätsinformation verwendet wird zum Steuern des Schalters (22), solange ein Kommunikationszeitplan nicht etabliert ist.

8. Ein Sternkoppler gemäß Anspruch 6 oder 7, wobei der Sternkoppler (1) aufweist wenigstens eine Bit Reshaping Einheit (27) an einem Eingangszweig vor oder nach der Aktivität detektierenden Einheit (26) oder an dem Ausgangszweig zum Wiedererzeugen von Kommunikationselementen.

9. Ein Sternkoppler gemäß einem der Ansprüche 6 bis 8 wobei der Sternkoppler (11) aufweist eine Kommunikationszeitplan Einheit (24) aufweisend eine Information, dahingehend, welcher Eingangszweig verbunden werden muss mit welchem Ausgangszweig für einen vorbestimmten Zeitschlitz und/oder eine Information, in welchen Zeitschlitzen die Aktivität detektierende Einheit (26) verwendet werden muss.

10. Ein Sternkoppler gemäß Anspruch 8 oder 9, wobei der Schalter (22) realisiert ist als ein analoger Querbalken Schalter oder ein digitaler Querbalken Schalter, der eine Uhr verwendet, wobei ein digitaler Querbalken Schalter in Kombination mit einer FIFO Einheit verwendet wird, wobei die Bit Reshaping Einheiten dann vor dem Schalters (22) angeordnet werden.

11. Ein Sternkoppler gemäß einem der Ansprüche 1 bis 9, wobei ein Speicherschalter verwendet wird umfassend einen Speicher zum Speichern aller eingegebenen Daten und Lesen der Ausgabedaten.

12. Ein Sternkoppler gemäß einem der vorhergehenden Ansprüche, wobei ein Schalter (22) zugewiesen wird zu einem einzigen Kommunikationskanal, wobei im Falle von mehreren Kanälen innerhalb des Netzwerkes jeder Kanal mit einem Schalter (22) verbunden ist, wobei die Protokoll Maschine (24), die Kommunikationszeitplan Einheit (25) und der Schalter Kontroller (23) gekoppelt sind an die mehreren Schalter (22) zum Steuern der mehreren Schalter (22).

13. Ein Sternkoppler gemäß einem der Ansprüche 1 bis 12, wobei das FlexRay Protokoll zur Kommunikation innerhalb des Netzwerkes verwendet wird.

14. Ein Sternkoppler gemäß Anspruch 13, wobei das FlexRay Protokoll umfasst ein statisches Protokollsegment und ein dynamisches Protokollsegment, wobei während des dynamischen Protokollsegments von dem FlexRay Protokoll der Sternkoppler (11) steuerbar ist als ein aktiver Sternkoppler, ohne Verwendung der mehrfachen Zuordnung von Eingangszweigen zu Ausgangszweigen, wobei der Sternkoppler eingerichtet ist, erst zu bedienen ein erstes Subnetz (A-D), das verbunden ist mit dem Sternkoppler (11) startend eine Übertragung, die als erstes bedient wird, und der Eingangszweig von dem ersten übertragenden Subnetz (A-D) verbunden ist mit allen anderen Subnetz Ausgangszweigen.

15. Ein Sternkoppler gemäß Anspruch 13 oder 14, wobei das FlexRay Protokoll umfasst ein statisches Protokollsegment und ein dynamisches Protokollsegment, wobei während des dynamischen Protokollsegments von dem FlexRay Protokoll die Protokoll Maschine (24) von dem Sternkoppler betreibbar ist zum Beobachten des empfangen Verkehrs zum Wiedererkennen der Position innerhalb des Kommunikationszeitplans, und, basierend auf der Beobachtung und dem vorbestimmten Kommunikationszeitplan, betreibbar ist, nur dem Eingangszweig, bestimmt in dem Stromschlitz, zu erlauben, zu übertragen.

16. Ein Sternkoppler gemäß Anspruch 13 oder 14, wobei das FlexRay Protokoll umfasst ein statisches Protokollsegment und ein dynamisches Protokollsegment, wobei während des dynamischen Protokollsegments von dem FlexRay Protokoll die Protokoll Maschine (24) von dem Sternkoppler betreibbar ist zum Beobachten des empfangen Verkehrs zum Wiedererkennen der Position innerhalb des Kommunikationszeitplans, und, in Antwort auf die Übertragung mittels eines Eingangszweiges (A-D) entgegen dem vorbestimmten Kommunikationszeitplan die Protokoll Maschine eingerichtet ist zum Blockieren dieses Eingangszweiges zum Beibehalten des dynamischen Segments innerhalb des Stromkreises.

17. Ein Sternkoppler gemäß Anspruch 13, wobei das FlexRay Protokoll umfasst ein statisches Protokollsegment und ein dynamisches Protokollsegment, wobei während des dynamischen Protokollsegments von dem FlexRay Protokoll die Protokoll Maschine (24) von dem Sternkoppler betreibbar ist zum Bestimmen der Position innerhalb des Kommunikationszeitplans, und, in Abhängigkeit von den Kommunikation Erfordernissen zwischen den Eingangszweigen (A-D), eingerichtet ist zum Steuern des Schalters (22), gesteuert einen oder einen Teil von den Eingangszweigen (A-D) von einem synchronisiert Werden zu entkoppeln, wobei den verbleibenden Eingangszweigen ein direktes Weiterleiten erlaubt ist von Daten zwischen einem Subnetz, das verbunden ist mit dem einen entkoppelten Eingangszweig oder zwischen verbundenen Knoten oder Subnetzen von entkoppelten Eingangszweigen (AD) während des dynamischen Protokollsegments.

18. Ein Sternkoppler gemäß einem der vorhergehenden Ansprüche, wobei das Schalten von den Schaltern (22) durchgeführt wird beruhend auf einer Schlitz Zahl und/oder einer Zyklus Zahl.

19. Ein Netzwerk aufweisend ein Cluster umfassend eine Mehrzahl von Knoten (n), wobei das Netzwerk betreibbar ist auf einer Zeit ausgelösten Basis, wobei wenigstens einige der Mehrzahl von Knoten (n) innerhalb des Clusters gekoppelt sind an einen Sternkoppler (11), wie beansprucht gemäß einem der vorhergehenden Ansprüche.

20. Ein Verfahren zum Kommunizieren zwischen Knoten (n) innerhalb eines Netzwerkes unter Verwendung eines Zeit ausgelösten Protokolls auf einer Zeitschlitz Basis, wobei die Knoten (n) gekoppelt sind an einen Sternkoppler (11), wobei das Verfahren aufweist:
Empfangen von Eingangsdaten an einem Eingangszweig von dem Sternkoppler (11);
Dekodieren von Kommunikationselementen von einem Ausgangszweig von einem Schalter (22), um eine Position innerhalb eines Kommunikationszeitplans von den Kommunikationselementen abzuleiten, wobei der Schalter eine Mehrzahl von Eingangszweigen und Ausgangszweigen hat;
Bereitstellen des Kommunikationszeitplans an einem Schalter Kontroller (23); und
wobei der Schalter Kontroller, den Kommunikationszeitplan verwendet zum Steuern des Schalters auf einer Zeitschlitz Basis, um jeden Eingangszweig mit einem oder mehreren Ausgangszweigen zu verbinden, wobei eine Mehrzahl von Eingangszweigen aktiv sein kann innerhalb desselben Zeit Schlitzes.

## Revendications

1. Coupleur en étoile (11) connecté à une pluralité de noeuds (n) dans un réseau automobile au moyen d'un protocole à déclenchement temporel sur une base d'intervalles de temps, où le flux d'informations dans ce réseau est basé sur une planification de communication prédéterminée déterminant quel noeud (n) peut transmettre dans un intervalle de temps prédéterminé, où le coupleur en étoile (11) comprend :
un commutateur (22) ayant une pluralité de branches d'entrée et de branches de sortie, où une branche est connectée à au moins un noeud (n) ;
un contrôleur de commutateur (23) pour commander le commutateur (22) ; et
des moyens pour dériver des connaissances sur la synchronisation du protocole, lesquelles connaissances sont utilisées pour transmettre de manière sélective des données entrantes dans un certain intervalle de temps à au moins une branche de sortie prédéterminée,
où les moyens pour dériver des connaissances sur la synchronisation du protocole comprennent un moteur de protocole (24) couplé à l'une des branches de sortie pour décoder des éléments de communication au sein de données de communication et pour dériver une position dans une planification de communication en grappe à partir des éléments de communication.

2. Coupleur en étoile selon la revendication 1, dans lequel le commutateur (22) est utilisable pour commuter deux, ou davantage, branches d'entrée du coupleur en étoile (11) au cours d'un intervalle de temps unique parallèlement à deux, ou davantage, branches de sortie.

3. Coupleur en étoile selon la revendication 1 ou la revendication 2, dans lequel le commutateur (22) est utilisable, en fonction de la planification de communication, pour commuter chaque branche d'entrée vers une ou plusieurs branches de sortie du coupleur en étoile (11).

4. Coupleur en étoile selon l'une quelconque des revendications précédentes, dans lequel le moteur de protocole (24) est couplé à une branche de sortie, où, dans le cas d'une sortie de données vers la même branche, la branche de sortie respective est désactivée par un moyen de commutation (28).

5. Coupleur en étoile selon l'une quelconque des revendications précédentes, dans lequel le moteur de protocole (24) est couplé à une branche de sortie supplémentaire du commutateur (22) ayant une matrice nx(n+1) pour être en mesure de connecter chacune des branches de sortie au moteur de protocole (24).

6. Coupleur en étoile selon l'une quelconque des revendications précédentes, dans lequel le coupleur en étoile (11) comprend des unités de détection d'activité (26) au niveau des branches d'entrée pour détecter le trafic de données sur une branche d'entrée en particulier, où les unités de détection d'activité (26) sont couplées au contrôleur de commutateur (23) pour fournir des informations d'activité, lesquelles sont utilisées pour contrôler le commutateur (22).

7. Coupleur en étoile selon la revendication 6, dans lequel les informations d'activité sont utilisées pour contrôler le commutateur (22) tant qu'une planification de communication n'est pas établie.

8. Coupleur en étoile selon la revendication 6 ou la revendication 7, dans lequel le coupleur en étoile (11) comprend au moins une unité de remise en forme de bit (27) au niveau d'une branche d'entrée avant ou après l'unité de détection d'activité (26) ou au niveau de la branche de sortie pour régénérer des éléments de communication.

9. Coupleur en étoile selon l'une des revendications 6 à 8, où le coupleur en étoile (11) comprend une unité de planification de communication (25) comprenant des informations indiquant quelle branche d'entrée doit être connectée à quelle branche de sortie pour un intervalle de temps prédéterminé et/ou des informations indiquant dans quels intervalles de temps les unités de détection d'activité (26) doivent être utilisées.

10. Coupleur en étoile selon la revendication 8 ou la revendication 9, dans lequel le commutateur (22) est réalisé sous la forme d'un commutateur à barres croisées analogique ou d'un commutateur à barres croisées numérique utilisant une horloge, où un commutateur à barres croisées numérique est utilisé en combinaison avec une unité FIFO, où les unités de remise en forme de bit (27) sont alors disposées avant le commutateur (22).

11. Coupleur en étoile selon l'une quelconque des revendications 1 à 9, dans lequel un commutateur de mémoire est utilisé, lequel comprend une mémoire pour stocker toutes les données entrées et lire les données de sortie.

12. Coupleur en étoile selon l'une quelconque des revendications précédentes, dans lequel un commutateur (22) est affecté à un canal de communication unique, où, dans le cas de plusieurs canaux dans le réseau, chaque canal est connecté à un commutateur (22), où le moteur de protocole (24), l'unité de planification de communication (25) et le contrôleur de commutateur (23) sont couplés aux multiples commutateurs (22) pour contrôler les multiples commutateurs (22).

13. Coupleur en étoile selon l'une des revendications 1 à 12, dans lequel protocole FlexRay est utilisé pour la communication au sein du réseau.

14. Coupleur en étoile selon la revendication 13, dans lequel le protocole FlexRay comprend un segment de protocole statique et un segment de protocole dynamique, où, au cours du segment de protocole dynamique du protocole FlexRay, le coupleur en étoile (11) peut être commandé en tant que coupleur en étoile actif, sans utiliser l'affectation multiple de branches d'entrée à des branches de sortie, où le coupleur en étoile est agencé pour desservir en premier un sous-réseau (A-D) connecté au coupleur en étoile (11) ; commencer une transmission est desservie en premier et la branche d'entrée du premier sous-réseau de transmission (A-D) est connectée à toutes les autres branches de sortie du sous-réseau.

15. Coupleur en étoile selon la revendication 13 ou la revendication 14, dans lequel le protocole FlexRay comprend un segment de protocole statique et un segment de protocole dynamique, où, pendant le segment de protocole dynamique du protocole FlexRay, le moteur de protocole (24) du coupleur en étoile est utilisable pour observer le trafic reçu pour reconnaître la position dans la planification de communication et, sur la base de cette observation et de la planification de communication prédéterminée, est utilisable pour ne permettre de transmettre qu'à seulement la branche d'entrée déterminée dans l'intervalle de temps courant.

16. Coupleur en étoile selon la revendication 13 ou la revendication 14, dans lequel le protocole FlexRay comprend un segment de protocole statique et un segment de protocole dynamique où, pendant le segment de protocole dynamique du protocole FlexRay, le moteur de protocole (24) du coupleur en étoile est utilisable pour observer le trafic reçu pour reconnaître la position dans la planification de communication et, en réponse à une transmission par une branche d'entrée (A-D) contraire à la planification de communication prédéterminée, un moteur de protocole (24) est arrangé pour bloquer cette branche d'entrée pour le restant du segment dynamique dans le cycle en cours.

17. Coupleur en étoile selon la revendication 13, dans lequel le protocole FlexRay comprend un segment de protocole statique et un segment de protocole dynamique où, pendant le segment de protocole dynamique du protocole FlexRay, le moteur de protocole (24) du coupleur en étoile (11) est utilisable pour déterminer la position dans la planification de communication, et, en lien avec les besoins de communication entre les branches d'entrée (A-D), il est arrangé pour commander le commutateur (22) pour découpler une branche, ou une partie des branches d'entrée (A-D), d'une synchronisation avec les branches d'entrée restantes pour permettre un transfert direct de données entre un sous-réseau connecté à ladite branche d'entrée découplée ou entre des noeuds connectés ou des sous-réseaux de branches d'entrée découplées (AD) au cours du segment de protocole dynamique.

18. Coupleur en étoile selon l'une quelconque des revendications précédentes, dans lequel la commutation du commutateur (22) est réalisée sur la base d'un numéro d'intervalle et/ou d'un numéro de cycle.

19. Réseau comprenant une grappe comprenant une pluralité de noeuds (n), où le réseau peut fonctionner sur la base d'un déclenchement temporel, en utilisant des intervalles de temps, où au moins certains noeuds de la pluralité de noeuds (n) au sein de la grappe sont couplés à un coupleur en étoile (11) selon l'une quelconque des revendications précédentes.

20. Procédé de communication entre des noeuds (n) dans un réseau utilisant un protocole à déclenchement temporel sur une base d'intervalles de temps, où les noeuds (n) sont couplés à un coupleur en étoile (11), le procédé comprenant les étapes suivantes :
recevoir des données d'entrée dans une branche d'entrée du coupleur en étoile (11);
décoder des éléments de communication à partir d'une branche de sortie d'un commutateur (22) pour dériver une position dans une planification de communication à partir des éléments de communication, où le commutateur a une pluralité de branches d'entrée et de branches de sortie ;
fournir la planification de communication à un contrôleur de commutateur (23) ; et
le contrôleur de commutateur utilise la planification de communication pour commander le commutateur, sur la base d'intervalles de temps, pour connecter chaque branche d'entrée à une ou à plusieurs branches de sortie, où une pluralité de branches d'entrée peuvent être actives dans le même intervalle de temps.
